**Europäisches Patentamt**

**European Patent Office**

**Office européen des brevets**

(11) Veröffentlichungsnummer: **0 141 202**
**B1**

## (12) EUROPÄISCHE PATENTSCHRIFT

(45) Veröffentlichungstag der Patentschrift:
**07.01.88**

(21) Anmeldenummer: **84111020.8**

(22) Anmeldetag: **14.09.84**

(51) Int. Cl.⁴: **H 01 G 4/42,** H 01 G 4/38,
**H 03 H 1/00**

(54) **Schaltungsanordnung zur Funkentstörung.**

(30) Priorität: **14.09.83 DE 3333198**

(43) Veröffentlichungstag der Anmeldung:
**15.05.85 Patentblatt 85/20**

(45) Bekanntmachung des Hinweises auf die Patenterteilung:
**07.01.88 Patentblatt 88/1**

(84) Benannte Vertragsstaaten:
**DE FR GB IT NL**

(56) Entgegenhaltungen:
**EP - A - 0 081 060**
**DE - B - 2 830 961**
**DE - C - 888 717**
**DE - C - 897 727**
**DE - U - 7 829 925**

(73) Patentinhaber: **Roederstein Spezialfabriken für**
**Bauelemente der Elektronik und Kondensatoren der**
**Starkstromtechnik GmbH, Ludmillastrasse 23/25,**
**D-8300 Landshut (DE)**

(72) Erfinder: **König, Franz, Zeisigweg 6, D-8307 Oberahrain**
**(DE)**

(74) Vertreter: **Dipl.-Phys.Dr. Manitz Dipl.-Ing., Dipl.-Wirtsch.**
**Finsterwald Dipl.-Chem.Dr. Heyn Dipl.-Phys. Rotermund**
**Morgan, B.Sc.(Phys.), Robert-Koch-Strasse 1,**
**D-8000 München 22 (DE)**

## Beschreibung

Die Erfindung betrifft eine Schaltungsanordnung zur Funkentstörung, bestehend aus elektrisch in Form einer Sternschaltung miteinander verbundenen Kondensatoren. Eine derartige Schaltungsanordnung wird zwischen die Netzzuleitungen eines zu entstörenden Gerätes und gegen Schutzleiter oder Masseleiter oder auch gegen das Gerätegehäuse geführt, wobei im Falle von voll isolierten Geräten eine Verbindung zwischen Gerätegehäuse und Schutzleiter nicht unbedingt vorhanden sein muss.

Schaltungsanordnungen zur Funkentstörung sind sowohl in Dreieckschaltung als auch in Sternschaltung bekannt. Mit beiden Arten dieser Entstörschaltungen lassen sich hochfrequenztechnisch optimale Verhältnisse schaffen. Bezüglich des Ableitstromes verhält sich die Sternschaltung wie eine entsprechende Dreieckschaltung mit gleicher Gesamt-Y-Kapazität.

Aus der europäischen Patentanmeldung 81 060 ist eine Funkentstöranordnung in Sternschaltung bekannt, bei der die X- und Y-Kondensatoren in einem einzigen Wickel zusammengefasst sind, dessen eine Stirnseite zum Zwecke der Verringerung von Störinduktivitäten mit einer den durchgehenden Hauptbelag kontaktierenden Metallschicht versehen ist, während an der gegenüberliegenden Stirnseite die drei Anschlüsse herausgeführt sind.

Nachteilig bei dieser bekannten Anordnung ist vor allem, dass die Einzelkondensatoren für sich nicht genau prüfbar sind, dass im Falle des Ausfalls eines der Einzelkondensatoren die gesamte Schaltungsanordnung geschädigt oder unbrauchbar wird und dass trotz der Verwendung einer Metallbeschichtung an einer Stirnfläche störende Induktivitätserscheinungen nicht vollständig ausgeschaltet werden können. Ein weiterer in der Praxis ganz wesentlicher Nachteil besteht darin, dass die bekannte Schaltungsanordnung nicht in Form einer regenerierbaren Anordnung ausgestaltet werden kann.

Aufgabe der vorliegenden Erfindung ist es, die Schaltungsanordnung zur Funkentstörung wie sie eingangs definiert worden ist, in der Weise auszubilden, dass eine besonders wirtschaftliche Fertigung möglich ist, Symmetrierprobleme vermieden werden, eine Prüfung mit entsprechend hoher Belastung durchführbar ist und Induktivitätsprobleme völlig beseitigt sind.

Diese Aufgabe wird nach der Erfindung dadurch gelöst, dass die Kondensatoren aus einzelnen, jeweils an ihren beiden Stirnseiten über Metallschichten kontaktierten Wickelkondensatoren in regenerierender Ausführung bestehen.

Durch die Verwendung von Wickelkondensatoren in regenerierender Ausführung, d.h. insbesondere in Form von Kondensatoren aus metallisierten Kunststoff-Folien, ist ein Ausheilen der einzelnen Kondensatoren mit doppelter Spannung möglich, eine beliebige und entsprechend exakte Symmetrierung erreichbar und ein Kurzschliessen der Windungen an beiden Stirnseiten und damit die Beseitigung jeglicher störender Wickelinduktivitäten erzielbar.

Vorzugsweise besitzen die als Rund- oder Flachwickel ausgebildeten Kondensatoren geometrisch jeweils zumindest im wesentlichen gleiche Form und sind mit zueinander parallelen Achsen nebeneinander angeordnet. An ihren unteren Stirnflächen werden diese Kondensatoren über eine tragende Verbindung elektrisch miteinander verbunden. Die auf der Gegenseite herausgeführten Anschlüsse können an den oberen Wickelstirnflächen durch Löten oder Schweissen kontaktiert und fixiert werden, wobei die Gestaltung dieser Anschlüsse praktisch beliebig ist. Das Anbringen von Litzen in normaler und vorbeigeschleifter Ausführungsform, von Flachsteckern oder Lötösen ist unproblematisch.

Bevorzugt sind die durch die tragende elektrische Verbindung zu einem Block zusammengefassten Einzelkondensatoren, die auch in dieser Form vor dem Einbau einzeln prüfbar und ausheilbar sind, zu einem Block zusammengefasst und in einem Kunststoffbecher angeordnet und vergossen. Als Kunststoffbecher können Rechteck- oder Rundbecher verwendet werden.

Das Grundkonzept der vorliegenden Erfindung, nämlich die Verwendung einzelner regenerierbarer Wickelkondensatoren zum Aufbau einer Entstörschaltung in Sternform führt ferner zu dem Vorteil, dass das bei Verwendung eines Mehrfachwickels stets vorhandene Symmetrierproblem nicht gegeben ist, da die Einzelkondensatoren im Rahmen einer Vorsortierung entsprechend den jeweiligen Erfordernissen ausgewählt werden können und somit die jeweils gegebenen Symmetrieforderungen ohne Schwierigkeiten erfüllbar sind. Ausserdem erfordert der Aufbau der erfindungsgemässen Schaltungsanordnung in der Praxis keine Spezialmaschinen, da die benötigten Einzelkondensatoren auf herkömmlichen Maschinen gemäss bewährter Technik gefertigt werden können.

Auch hinsichtlich der Lagerhaltung entstehen im Vergleich zu Mehrfachwickel-Anordnungen Vorteile, da die jeweils benötigte Schaltungsanordnung aus vorliegenden, vorsortierten und vorgeprüften Einzelkondensatoren schnell und einfach zusammengestellt werden kann, während vergleichbare Anordnungen nach der Mehrfachwickeltechnik bereits für bestimmte und definierte Einsatzmöglichkeiten als Gesamtheit gefertigt werden müssen.

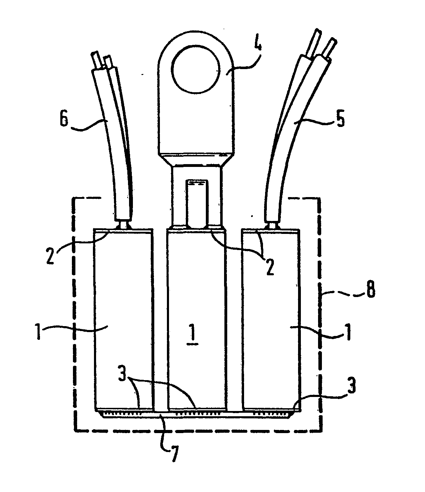

Ein Ausführungsbeispiel der Erfindung wird anhand der Zeichnung näher erläutert; die einzige Figur dieser Zeichnung zeigt in schematischer Darstellung eine Schaltungsordnung zur Funkentstörung in Sternschaltung.

Drei aus metallisierten Kunststoff-Folien gewickelte Einzelkondensatoren 1 sind an ihren Stirnseiten jeweils mit einer Metallschicht 2 bzw. 3 versehen, welche die Windungen der beiden Beläge des Kondensators kurzschliesst und damit evtl. störende Induktivitätseffekte beseitigt.

Die unteren metallisierten Stirnflächen 3 der Kondensatoren 1 sind über eine mechanisch tragende und elektrisch leitende Verbindung 7 miteinander verbunden, wodurch sich eine Sternschaltung dieser Kondensatoren 1 ergibt. Die oberen metallisierten Stirnflächen der Kondensatoren 1 sind mit den jeweils erforderlichen Anschlüssen versehen, im dargestellten Beispiel mit Leitungen 5, 6 zur Einschaltung der Schaltungsanordnung zwischen die Anschlussleitungen eines zu entstörenden Gerätes, sowie einer Anschlusslasche 4, die als abgewinkeltes Teil ausgebildet und unmittelbar mit der Metallschicht des mittleren Kondensators 1 verlötet oder verschweisst ist.

Die Gesamtanordnung aus diesen drei nebeneinander angeordneten Kondensatoren 1 wird in ein Kunststoffgehäuse 8 eingebracht und darin vergossen. Auf diese Weise wird eine kompakte und betriebssichere Schaltungsanordnung erhalten, die durch Auswahl der Einzelkondensatoren sehr gut symmetrierbar ist, bei der Prüfung keine Schwierigkeit bereitet, regenerierbare Bestandteile enthält und hinsichtlich der Gestaltung der Anschlüsse praktisch beliebige Freiheit gibt.

Mit zunehmender Gesamtkapazität ergibt sich bei dieser Anordnung ferner eine Einsparung an Volumen.

## Patentansprüche

1. Schaltungsanordnung zur Funkentstörung von elektrischen Geräten, insbesondere von vollisolierten Geräten, die zwischen die Netzzuleitungen des zu entstörenden Gerätes und gegen Schutzleiter oder Masseleiter oder auch gegen das Gerätegehäuse geschaltet ist, bestehend aus elektrisch in Form einer Sternschaltung miteinander verbundenen Kondensatoren, dadurch gekennzeichnet, dass die Kondensatoren (1) aus einzelnen, jeweils an ihren beiden Stirnseiten über Metallschichten (2, 3) kontaktierten Wickelkondensatoren in regenerierender Ausführung bestehen.

2. Schaltungsanordnung nach Anspruch 1, dadurch gekennzeichnet, dass die als Rund- oder Flachwickel ausgebildeten Kondensatoren (1) geometrisch jeweils zumindest im wesentlichen gleiche Form besitzen und mit zueinander parallelen Achsen nebeneinander angeordnet sind.

3. Schaltungsanordnung nach Anspruch 2, dadurch gekennzeichnet, dass die im wesentlichen in einer Ebene liegenden Metallschichten (2, 3) einer Stirnseite der Kondensatoren (1) über eine mechanisch tragende Verbindung (7) elektrisch leitend miteinander verbunden sind.

4. Schaltungsanordnung nach Anspruch 2, dadurch gekennzeichnet, dass die durch die tragende elektrische Verbindung (7) zu einem Block zusammengefassten Einzelkondensatoren in einem Kunststoffbecher (8) angeordnet und vergossen sind.

5. Schaltungsanordnung nach einem oder mehreren der vorhergehenden Ansprüche, dadurch gekennzeichnet, dass als Einzelkondensatoren (6) hinsichtlich des Kapazitätswertes vorsortierte Wickelkondensatoren aus metallisierten Kunststoff-Folien verwendet sind.

6. Schaltungsanordnung nach einem oder mehreren der vorhergehenden Ansprüche, dadurch gekennzeichnet, dass an den zwischen die Anschlussleitungen zu schaltenden Einzelkondensatoren (1) jeweils Doppelanschlussdrähte (5, 6) in Vorbeischleiftechnik mit der jeweiligen Metallschicht (2) verbunden sind.

7. Schaltungsanordnung nach einem oder mehreren der vorhergehenden Ansprüche, dadurch gekennzeichnet, dass zumindest an einem der Einzelkondensatoren (1) als Anschlusselement eine abgewinkelt ausgebildete Anschlusslasche (4) befestigt ist.

## Revendications

1. Dispositif d'antiparasitage d'appareils électriques qui est monté entre les lignes d'alimentation de réseau de l'appareil à antiparasiter et est connecté à la terre ou à la masse ou également au boîtier de l'appareil, constitué par des condensateurs reliés électriquement entre eux par un montage en étoile, caractérisé en ce que les condensateurs (1) consistent en condensateurs enroulés de type régénératif mis en contact aux deux faces frontales par des couches métalliques (2, 3).

2. Dispositif selon la revendication 1, caractérisé en ce que les condensateurs (1) qui sont des enroulements ronds ou plats ont, au moins pour l'essentiel, la même forme géométrique et sont juxtaposés avec leurs axes parallèles entre eux.

3. Dispositif selon la revendication 2, caractérisé en ce que les couches métalliques (2, 3) d'un côté frontal des condensateurs (1), qui se trouvent essentiellement dans un même plan, sont reliées entre elles électriquement par une liaison (7) mécaniquement porteuse.

4. Dispositif selon la revendication 2, caractérisé en ce que les condensateurs élémentaires groupés en un bloc par la liaison (7) électrique porteuse sont disposés dans un boîtier plastique (8) dans lequel ils sont scellés.

5. Dispositif selon une quelconque des revendications précédentes, caractérisé en ce que sont utilisés comme condensateurs élémentaires (6) des condensateurs enroulés faits en feuilles plastiques métallisées, triés au préalable en ce qui concerne la valeur de leur capacité.

6. Dispositif selon une quelconque des revendications précédentes, caractérisé en ce qu'aux condensateurs élémentaires (1) qui doivent être intercalés entre les raccordements sont reliés avec la couche métallique (2) des câbles de raccordement doubles (5, 6) par technique de pré-bouclage.

7. Dispositif selon une quelconque des revendications précédentes, caractérisé en ce qu'à au moins l'un des condensateurs élémentaires (1) est fixée comme élément de raccordement une patte de raccordement (4) coudée en U.

## Claims

1. Circuit arrangement for the interference suppression of electrical apparatus, in particular fully insulated apparatus which is connected between the power supply lines of the apparatus to be suppressed and to the protective conductor or earth conductor, or also to the housing of the apparatus, the circuit arrangement consisting of capacitors which are connected together electrically in the form of a star connection, characterised in that the capacitors (1) consist of individual wound capacitors of the regenerative type which are respectively contacted at their two end faces via metal layers (2, 3).

2. Circuit arrangement in accordance with claim 1, characterised in that the capacitors (1) which are formed as round or flat coils each have geometrically at least substantially the same shape and are arranged alongside one another with their axes parallel to one another.

3. Circuit arrangement in accordance with claim 2, characterised in that the metal layers (2, 3) of one end face of the capacitors (1) lying substantially in one plane are electrically conductively connected together via a mechanical carrying connection (7).

4. Circuit arrangement in accordance with claim 2, characterised in that the individual capacitors which are combined into a block by the carrying electrical connection (7) are arranged in a plastic pot (8) and potted.

5. A circuit arrangement in accordance with one or more of the preceding claims, characterised in that wound capacitors which are presorted with respect to their capacity value and consist of metallised plastic foils are used as the individual capacitors (6).

6. Circuit arrangement in accordance with one or more of the preceding claims, characterised in that respective double connection wires (5, 6) are connected to the individual capacitors (1) which are to be connected between the connection lines, to the respective metallic layer (2) by the loop connection technique.

7. Circuit arrangement in accordance with one or more of the preceding claims, characterised in that an angled connection lug (4) is secured as a connection element to at least one of the individual capacitors (1).